(19)

Europäisches
Patentamt
European
Patent Office
Office européen
des brevets

(11) **EP 2 610 614 A1**

(12) **EUROPEAN PATENT APPLICATION**

(43) Date of publication:
**03.07.2013 Bulletin 2013/27**

(51) Int Cl.:
**G01N 27/333** (2006.01)

(21) Application number: **12198257.3**

(22) Date of filing: **19.12.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **28.12.2011 JP 2011287806**

(71) Applicant: **HORIBA, LTD.**
**Kyoto-shi,**
**Kyoto 601-8510 (JP)**

(72) Inventor: **Iwamoto, Yasukazu**
**Kyoto-shi, Kyoto, 601-8510 (JP)**

(74) Representative: **Isarpatent**
**Patent- und Rechtsanwälte**
**Friedrichstrasse 31**
**80801 München (DE)**

(54) **Ion analyzer**

(57)     This invention relates to an ion analyzer of a multisensor type that can conduct an accurate analysis and that is easy to conduct maintenance. The ion analyzer has a liquid membrane type ion-selective electrode 71, 72 comprising multiple types of ion-sensitive membranes 15, 16 wherein each of multiple types of ionophores that selectively capture different ion is supported by a base material respectively, an internal solution 14c and a liquid junction 17 from which the internal solution 14c exudes, and the multiple types of the ion-sensitive membranes 15, 16 and the liquid junction 17 are arranged on the same supporting body, and at least one ion-sensitive membrane 16 among the multiple types of the ion-sensitive membranes 15, 16 is arranged outside of an area that is immersed in the internal solution 14c that exudes from the liquid junction 17.

FIG.1

## Description

FIELD OF THE ART

This invention relates to an ion analyzer of a multisensor type whose object to be analyzed is a plurality of types of ions.

BACKGROUND ART

Conventionally known are a variety of ionophores (ion-selective ligand) that can selectively capture a specific ion, and a liquid membrane type ion-selective electrode comprising a liquid membrane type ion-sensitive membrane wherein an ionophore is supported has been developed by making use of the ionophores (patent document 1). It is possible for this liquid membrane type ion-selective electrode to make a variety of ions as an object to be analyzed by changing the ionophore according to the target ion. As a result of this, it is also possible to constitute a multisensor whose object to be analyzed is multiple ions by the use of the liquid membrane type ion-selective electrode.

PRIOR ART DOCUMENT

Patent document 1 Japanese Unexamined Patent Application Publication No. 2007-33333
Patent document 2 Japanese Unexamined Patent Application Publication No. 63-138255

DISCLOSURE OF THE INVENTION

PROBLEMS TO BE SOLVED BY THE INVENTION

However, there is some ionophore that captures an ion other than an object to be analyzed because of its high affinity for ions. Then if the ionophore that has a high affinity to the ion contained in the internal solution of the reference electrode is supported by an ion-sensitive membrane, as shown in the patent document 2, in case that the liquid junction of the reference electrode and the ion-sensitive membrane are arranged on the same supporting body, the ionophore supported by the ion-sensitive membrane captures the ion contained in the internal solution that exudes from the liquid junction, which might prevent the target ion from being analyzed.
Conventionally, in case that the liquid membrane type ion-sensitive membrane is polluted by an ion other than the object to be analyzed (in case that the ion other than the ion as being an object to be analyzed is captured by the ionophore), the ion-sensitive membrane is washed by the aqueous solution containing the ion as being the object to be analyzed and the ion in a hole of the ionophore is substituted by the ion as being the object to be analyzed, namely, so-called aging process is conducted. Especially, in case that an electrolyte contained in the internal solution that exudes from the liquid junction crystallizes, a lengthy aging process is required.
Then the present claimed invention intends to provide a multisensor type ion analyzer that can conduct an analysis with high accuracy and that is easy to conduct maintenance.

MEANS TO SOLVE THE PROBLEMS

More specifically, an ion analyzer in accordance with this invention has a liquid membrane type ion-selective electrode comprising multiple types of ion-sensitive membranes wherein each of multiple types of ionophores that selectively captures a different ion is supported by a base material respectively, an internal solution and a liquid junction from which the internal solution exudes, and is characterized by that the multiple types of the ion-sensitive membranes and the liquid junction are arranged on the same supporting body, and at least one ion-sensitive membrane among the multiple types of the ion-sensitive membranes is arranged outside of an area that is immersed in the internal solution that exudes from the liquid junction.
Most of all, it is preferable that the multiple types of the ion-sensitive membranes and the liquid junction are arranged on a line, and among the multiple types of the ion-sensitive membranes, the bigger a selectivity coefficient of the ionophore supported by the ion-sensitive membrane to an ion contained in the internal solution is, the farther position from the liquid junction the ion-sensitive membrane is arranged at. It is more preferable that the liquid junction, an ion-sensitive membrane wherein the ionophore whose selectivity coefficient to the ion contained in the internal solution is smaller (lower in affinity) is supported, and an ion-sensitive membrane wherein the ionophore whose selectivity coefficient to the ion contained in the internal solution is bigger (higher in affinity) is supported are arranged on a line in this order.
In accordance with this arrangement, it is possible prevent the ion-sensitive membrane wherein the ionophore whose selectivity coefficient to the ion contained in the internal solution is bigger is supported from being polluted by the ion contained in the internal solution. As a result of this, it is possible to conduct a highly accurate analysis, a troublesome aging process becomes unnecessary and a slight washing on the sensor surface by the use of water or the correction liquid will do even though the internal solution exudes from the liquid junction.
In order to form the liquid membrane type ion-sensitive membrane, for example, dissolve a resin to be a base material, an elasticizer and an ionophore into an organic solvent, pour the dissolved resin, elasticizer and ionophore into a predetermined frame formed on a supporting body and then evaporate the organic solvent. However, if two of the ion-sensitive membranes spread and contact each other in a liquid state prior to evaporation of the organic solvent, it is not possible to secure insulation of each other. On the contrary, if a concave groove or a convex wall is formed to separate the multiple types of the ion-sensitive membranes, it is possible to prevent the ion-sensitive membranes from making contact each other even though the different ion-sensitive membranes spread. In addition, if a concave groove or a convex wall is formed at least between the multiple types of the ion-sensitive membranes, it is possible to effectively prevent the ion-sensitive membrane wherein the ionophore whose selectivity coefficient to the ion contained in the internal solution is bigger is supported from being polluted even though the internal solution exudes from the liquid junction.

As the ion analyzer in accordance with this invention represented is an ion analyzer wherein the multiple types of the ionophores are a sodium ionophore and a potassium ionophore, the internal solution is an aqueous solution of ammonium salt, and the liquid junction, a sodium ion-sensitive membrane wherein the sodium ionophore is supported, and a potassium ion-sensitive membrane wherein the potassium ionophore is supported are arranged on a line in this order.

In accordance with this arrangement, even though an ammonium ion whose selectivity coefficient to a potassium ionophore such as Bis (12-crown-4) is big is contained in the internal solution, since the potassium ion-sensitive membrane is arranged at a position distant from the liquid junction, it is possible to prevent the potassium ion-sensitive membrane from being polluted by the ammonium ion. As a result, even though the amount of the potassium ion in urine is subtle, it is possible to conduct the analysis with high accuracy so that the ion analyzer can be preferably used as an analyzer to measure a ratio between the sodium ion concentration and the potassium ion concentration in urine.

## EFFECT OF THE INVENTION

In accordance with this invention having the above arrangement, since the ion-sensitive membrane wherein an ionophore whose selectivity coefficient to the ion contained in the internal solution of the reference electrode is bigger is supported can be prevented from being polluted, it is possible both to conduct the analysis with high accuracy and to facilitate the maintenance.

## BRIEF DESCRIPTION OF THE DRAWINGS

Fig. 1 is an exploded perspective view showing a structure of an ion analyzer in accordance with one embodiment of this invention.

Fig. 2 is a longitudinal sectional view showing a structure of a flat-type sensor of this embodiment.

Fig. 3 is an exploded perspective view showing a principal part of the flat-type sensor of this embodiment.

Fig. 4 is an enlarged perspective view showing a principal part of a flat-type sensor in accordance with other embodiment.

## BEST MODES OF EMBODYING THE INVENTION

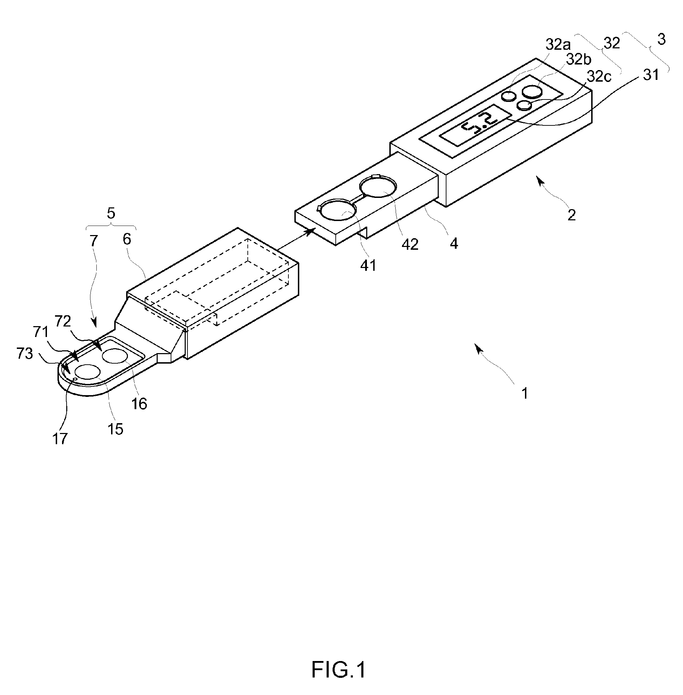

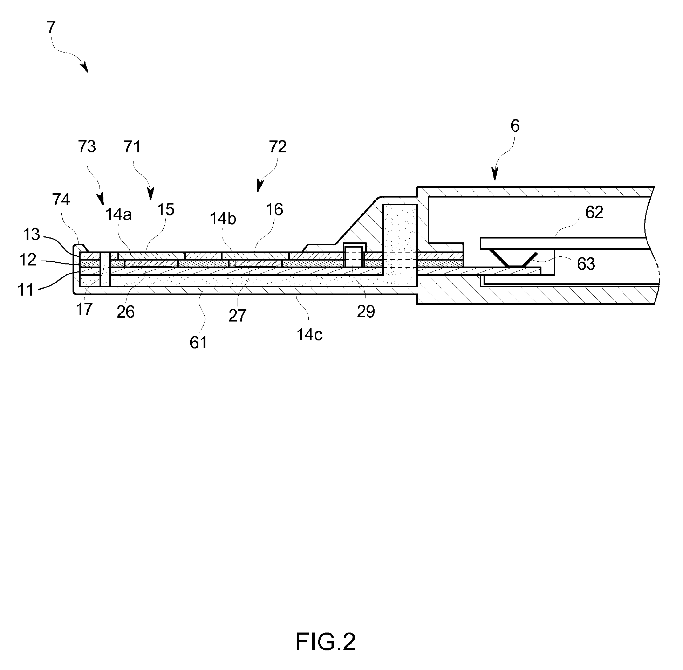

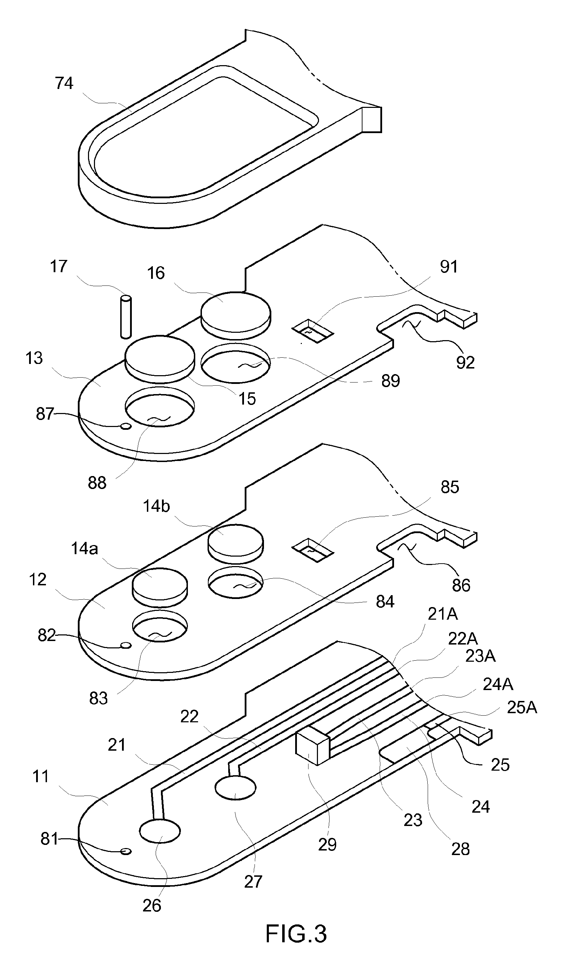

One embodiment of this invention will be explained with reference to drawings.
An ion analyzer 1 in accordance with this embodiment is for measuring a concentration of a sodium ion and a concentration of a potassium ion in, for example, urine, and as shown in Fig. 1, comprises a body 2 made of a resin, an arithmetic processing part (not shown in drawings) such as a micro computer incorporated in the body 2, a display/operation part 3 formed on an upper surface of the body 2, a power source part 4 formed adjacent to the display/operation part 3 and an electrode part 5 made of a synthetic resin and formed in a waterproof structure.
Lead parts 21A, 22A, 23A 24A, 25A of a flat-type sensor 7, to be described later, and a connecting part 63 that is connected to a circuit substrate 62 having the arithmetic processing part are provided inside of the body 2. The circuit substrate 62 is connected to and supported by a case.
The display/operation part 3 comprises a display part 31 and an operation part 32 that operates various buttons such as a power button 32a, a correction button 32b and a hold button 32c. The power source part 4 comprises button batteries 41, 42.
The electrode part 5 comprises a tubular part 6 whose one end opens to make it possible to house the power source part 4 and a flat-type sensor 7 that is continuously arranged at the other end of the tubular part 6. The electrode part 5 is so configured that can be integrally connected with the body 2 by being mounted on the body 2 so as to cover the power source part 4 or that can be separated from the body 2.
The flat-type sensor 7 is, as shown in Fig. 2 and Fig. 3, made of a material such as polyethylene terephthalate having electric insulation, and comprises substrates 11, 12, 13 each of which is laminated. A part of each substrate 11, 12, 13 is formed in a shape of an arc. The third substrate 13 locating at the top layer and the second substrate 12 locating at the middle layer are the same in plane view (the shape), and the arc part of the first substrate 11 locating at the lower layer is the same as that of the second substrate 12 and the third substrate 13, and other side of the first substrate 11 is longer than that of the second substrate 12 and the third substrate 13. In addition, a suspected liquid holder 74 is arranged to surround a peripheral border of the third substrate 13, and a sample housing part is formed by the suspected liquid holder 74.

Conductive parts 21, 22, 23, 24, 25 are formed on an upper surface of the first substrate 11 by silk-screen printing, for example, Ag paste after providing a predetermined pretreatment, and a circular through bore 81 is formed on the first substrate 11. The conductive parts 21, 22, 23, 24, 25 are processed as follows. In other words, a distal end of the conductive part 21 locating at one of the outsides is covered with AgCl and a circular inner electrode 26 of a Na$^+$ electrode 71 is formed, and a distal end of the conductive part 22 locating at an inner side of the conductive part 21 is also covered with AgCl and a circular inner electrode 27 of a K$^+$ electrode 72 is formed. In addition, a distal end of the conductive part 25 locating at the other outside is also covered with AgCl and an inner electrode 28 of a reference electrode 73 having an elongated shape locating at one of the side end parts of the substrate 11 is formed. Furthermore, a temperature compensating element 29 such as a thermister is arranged over a distal end of the conductive part 23 and a distal end of the conductive part 24, wherein the conductive parts 23, 24 locate at an inner side. Other end of each conductive part 21,22,23,24,25 constitutes lead part 21A, 22A, 23A, 24A, 25A by itself.

The second substrate 12 is provided with a through bore 82 that is arranged at a position corresponding to the through bore 81 and that has the same diameter as that of the through bore 81, through bores 83, 84 each of which is formed at a position corresponding to each of the inner electrode 26 and inner electrode 27 and whose diameter is a little larger than that of the through bore 81, 82, and a rectangular through bore 85 that is formed at a position corresponding to the temperature compensating element 29 and whose size is generally the same as that of the temperature compensating element 29. Furthermore, an elongated cutout 86 is formed at a side end part corresponding to the inner electrode 28 of the reference electrode 73.

The third substrate 13 is provided with a through bore 87 that is arranged at a position corresponding to the through bores 81, 82 and that has the same diameter as that of the through bore 81, 82, through bores 88, 89 each of which is formed at a position corresponding to each of the through bore 83 and the through bore 84 and whose diameter is a little larger than that of the through bore 83, 84, and a rectangular through bore 91 that is formed at a position corresponding to the through bore 85 and whose size is generally the same as that of the through bore 85. Furthermore, a cutout 92 whose size is the same as that of the cutout 86 is formed at a position corresponding to the cutout 86.

A liquid junction 17 of the reference electrode 73 composed of a porous body made of polyethylene is loaded in an inserting state on the through bores 81, 82, 87 each of which is formed at the corresponding position of each of the substrates 11, 12, 13. The liquid junction 17 is mounted in a state that the upper surface of the liquid junction 17 is generally flush with an upper surface of the third substrate 13 locating at the top layer.

A gelled internal solution 14a is mounted on the through bore 83 formed on the second substrate 12 and a gelled internal solution 14b is mounted on the through bore 84 on the second substrate 12. The gelled internal solution 14a is formed into a disk shape and made of a pH buffer solution containing $CaCl_2$ to which a sodium ion is added and to which a gelatinizing agent and a gel evaporation retardant are further added. The gelled internal solution 14b is formed into a disk shape and made of a pH buffer solution containing $CaCl_2$ to which a potassium ion is added and to which a gelatinizing agent and a gel evaporation retardant are further added. A Cl$^-$ concentration of the internal solution is adjusted to 0.1M ~ the saturated concentration. The gelled internal solution 14a is mounted on inside of the through bore 83 in a state that an upper surface of the gelled internal solution 14a projects a little from an upper surface of the second substrate 12, and makes contact with the inner electrode 26 formed on an upper surface of the first substrate 11 through the through bore 83. The gelled internal solution 14b is mounted on inside of the through bore 84 in a state that an upper surface of the gelled internal solution 14b projects a little from an upper surface of the second substrate 12, and makes contact with the inner electrode 27 formed on the upper surface of the first substrate 11 through the through bore 84.

A disk shaped sodium ion-sensitive membrane 15 is mounted on the through bore 88 formed on the third substrate 13 and the sodium ion-sensitive membrane 15 makes contact with the gelled internal solution 14a and is fixed to the third substrate 13 in a state that an upper surface of the gelled internal solution 14a generally flush with the upper surface of the third substrate 13. A disk shaped potassium ion-sensitive membrane 16 is mounted on the through bore 89 formed on the third substrate 13 and the potassium ion-sensitive membrane 16 makes contact with the gelled internal solution 14b and is fixed to the third substrate 13 in a state that the upper surface of the gelled internal solution 14b generally flush with the upper surface of the third substrate 13.

The solid sodium ion-sensitive membrane 15 is formed with a procedure of adding a plasticizer, and Bis (12-crown-4) as a sodium ionophore to polyvinyl chloride (PVC), dissolving the polyvinyl chloride to which the plasticizer and Bis (12-crown-4) are added with tetrahydrofuran (THF), filling the dissolved polyvinyl chloride into the through bore 88 by means of potting or an ink jet printing method, and heating so as to evaporate tetrahydrofuran (THF).

The potassium ion-sensitive membrane 16 is formed by the same method as that of the sodium ion-sensitive membrane 15 except for using Bis (benzo-15-crown-5) as a potassium ionophore.

The liquid junction 17, the sodium ion-sensitive membrane 15 and the potassium ion-sensitive membrane 16 are arranged on a line, and the potassium ion-sensitive membrane 16 wherein the potassium ionophores whose selectivity coefficient to an ammonium ion is bigger is supported is arranged at a position farther away from the liquid junction 17. The selectivity coefficient of the potassium ionophore (Bis (benzo-15-crown-5)) and the selectivity coefficient of the sodium ionophore (Bis (12-crown-4)) are as follows.

potassium ionophore selectivity coefficient :

$$: \log k^{pot}_{K,NH_4} = -2.1$$

sodium ionophore selectivity coefficient :

$$: \log k^{pot}_{Na,NH_4} = -3$$

A gelled internal solution 14c of the reference electrode 73 is arranged from below the first substrate 11 locating at the lowest layer to the upside of the third substrate 13 locating at the top layer in a case 61 continuously arranged to the tubular part 6. The gelled internal solution 14c is so filled that an upper part and a lower part of the gelled internal solution 14c are in communication through a gap between a side part, in the internal electrode 28 side of the reference electrode 73, of the substrate 11 ~ 13 and the case 61, and the gelled internal solution 14c makes contact with a surface of the inner electrode 28 of the reference electrode 73 and the lower end part of the liquid junction 17. The gelled internal solution 14c of the reference electrode 73 is an internal solution comprising an $NH_4Cl$ aqueous solution of 0.1M ~ the saturated concentration to which a gelling agent and a gel evaporation retardant are added.

In order to measure the sodium ion concentration or the potassium ion concentration in urine by the use of the ion analyzer 1, first, drip an adequate amount of the urine on the sodium ion-sensitive membrane 15 and the potassium ion-sensitive membrane 16. Then an electromotive force is caused for the sodium ion-sensitive membrane 15 in accordance with a difference between an ionic concentration of the gelled internal solution 14a and an ionic concentration of the urine and an electromotive force is caused for the potassium ion-sensitive membrane 16 in accordance with a difference between an ionic concentration of the gelled internal solution 14b and the ionic concentration of the urine. Each of the electromotive forces is detected as an electric potential difference between the internal electrode 26 of the $Na^+$ electrode 71 and the internal electrode 28 of the reference electrode 73, and an electric potential difference between the internal electrode 27 of the $K^+$ electrode 72 and the internal electrode 28 of the reference electrode 73 respectively. And then, the sodium ion concentration and the potassium ion concentration are calculated based on the electromotive force and displayed on the display part 31.

In accordance with the ion analyzer 1 of this invention having the above-mentioned arrangement, since the potassium ion-sensitive membrane 16 is arranged farther away from the liquid junction 17, the sodium ion-sensitive membrane 16 will not contact the internal solution of the reference electrode 73 even though the internal solution exudes from the liquid junction 17. As a result of this, it is possible to prevent the potassium ion-sensitive membrane 16 from being contaminated by an ammonium ion contained in the internal solution of the reference electrode 73. This makes it possible to conduct an analysis on a subtle amount of sodium ions in urine with high accuracy. In addition, this arrangement makes it possible to omit the aging process, and just washing the flat-type sensor 7 will do even though the internal solution of the reference electrode 73 exudes from the liquid junction 17.

The present claimed invention is not limited to the above-mentioned embodiment.

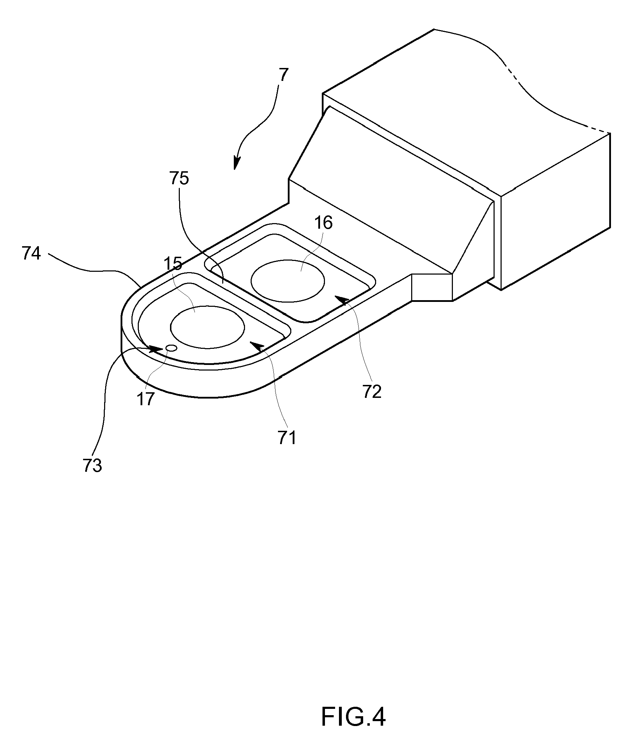

For example, in order to prevent the insulation between the sodium ion-sensitive membrane 15 and the potassium ion-sensitive membrane 16 from getting damaged due to contact each other in a liquid state prior to evaporation of the organic solvent, or in order to prevent the potassium ion-sensitive membrane 16 from getting polluted by the internal solution of the reference electrode 73 more effectively, a convex wall 75 may be arranged, as shown in Fig. 4, between the sodium ion-sensitive membrane 15 and the potassium ion-sensitive membrane 16. In addition, a concave groove may be arranged instead of the convex wall 75.

In addition, an installation surface of the sodium ion-sensitive membrane 15 and the potassium ion-sensitive membrane 16 may be in a stepwise shape or inclined and the potassium ion-sensitive membrane 16 is arranged at a position higher than that of the sodium ion-sensitive membrane 15. Furthermore, in case that the sodium ion-sensitive membrane 15 and the potassium ion-sensitive membrane 16 are arranged on the inclined surface, it will do that the sodium ion-sensitive membrane 15 and the potassium ion-sensitive membrane 16 locate at a position higher than that of the liquid junction 17 irrespective of which of the sodium ion-sensitive membrane 15 and the potassium ion-sensitive membrane 16 locates at a higher or lower position.

The ion analyzer in accordance with this invention is not limited to a combination of the sodium ion-sensitive membrane and the potassium ion-sensitive membrane, and may be a combination of, for example, an ammonium ion-sensitive membrane and a potassium ion-sensitive membrane. If the ammonium ion-sensitive membrane and the potassium ion-sensitive membrane are combined and used, it is possible to constitute an ion analyzer that can measure an ammonium ion concentration by correcting an influence from the potassium ion. For example, TD 19C6 can be used as an ammonium ionophore, and for example, Bis (benzo-15-crown-5) can be used as the potassium ionophore.

A part or all of the above-mentioned embodiment or the modified embodiment can be combined without departing from a spirit of this invention.

**EXPLANATION OF CODES**

1        ion analyzer
14c     gelled internal solution of the reference electrode
15       sodium ion-sensitive membrane
16       potassium ion-sensitive membrane
17       liquid junction
71       Na$^+$ electrode
72       K$^+$ electrode
73       reference electrode

**Claims**

1.   An ion analyzer having a liquid membrane type ion-selective electrode comprising multiple types of ion-sensitive membranes wherein each of multiple types of ionophores that selectively captures a different ion is supported by a base material respectively, an internal solution and a liquid junction from which the internal solution exudes, wherein
     the multiple types of the ion-sensitive membranes and the liquid junction are arranged on the same supporting body, and
     at least one ion-sensitive membrane among the multiple types of the ion-sensitive membranes is arranged outside of an area that is immersed in the internal solution that exudes from the liquid junction.

2.   The ion analyzer described in claim 1, wherein
     the multiple types of the ion-sensitive membranes and the liquid junction are arranged on a line, and among the multiple types of the ion-sensitive membranes, the bigger a selectivity coefficient of the ionophore supported by the ion-sensitive membrane to an ion contained in the internal solution is, the farther position from the liquid junction the ion-sensitive membrane is arranged at.

3.   The ion analyzer described in claim 1, wherein
     a concave groove or a convex wall to separate the multiple types of the ion-sensitive membranes is formed.

4.   The ion analyzer described in claim 1, wherein
     the multiple types of the ionophores are a sodium ionophore and a potassium ionophore,
     the internal solution is an aqueous solution of ammonium salt, and
     the liquid junction, a sodium ion-sensitive membrane wherein the sodium ionophore is supported, and a potassium ion-sensitive membrane wherein the potassium ionophore is supported are arranged on a line in this order.

FIG.1

FIG.2

FIG.3

FIG.4

EP 2 610 614 A1

| | Europäisches Patentamt<br>European Patent Office<br>Office européen des brevets | EUROPEAN SEARCH REPORT | Application Number<br>EP 12 19 8257 |

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| X<br>Y | EP 0 450 473 A2 (HORIBA LTD [JP])<br>9 October 1991 (1991-10-09)<br>* the whole document * | 1<br>2,3 | INV.<br>G01N27/333 |
| Y | EP 0 293 858 A2 (ABBOTT LAB [US])<br>7 December 1988 (1988-12-07)<br>* column 9, line 26 - column 10, line 38;<br>figures 1,13 * | 2,3 | |
| Y | US 4 713 165 A (CONOVER GILBERT [US] ET<br>AL) 15 December 1987 (1987-12-15)<br>* column 9, line 33 - line 54 *<br>* column 10, line 11 - line 18; figure 1 * | 2,3 | |
| | | | TECHNICAL FIELDS<br>SEARCHED (IPC)<br><br>G01N |

The present search report has been drawn up for all claims

| Place of search | Date of completion of the search | Examiner |
|---|---|---|
| Munich | 21 March 2013 | Komenda, Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

11

**ANNEX TO THE EUROPEAN SEARCH REPORT
ON EUROPEAN PATENT APPLICATION NO.**                    EP 12 19 8257

This annex lists the patent family members relating to the patent documents cited in the above-mentioned European search report.
The members are as contained in the European Patent Office EDP file on
The European Patent Office is in no way liable for these particulars which are merely given for the purpose of information.

21-03-2013

| Patent document cited in search report | | Publication date | Patent family member(s) | | Publication date |
|---|---|---|---|---|---|
| EP 0450473 | A2 | 09-10-1991 | EP | 0450473 A2 | 09-10-1991 |
| | | | JP | H03127252 U | 20-12-1991 |
| | | | US | 5234568 A | 10-08-1993 |
| EP 0293858 | A2 | 07-12-1988 | AU | 602581 B2 | 18-10-1990 |
| | | | AU | 1679688 A | 01-12-1988 |
| | | | CA | 1297946 C | 24-03-1992 |
| | | | DE | 3888577 D1 | 28-04-1994 |
| | | | DE | 3888577 T2 | 04-08-1994 |
| | | | EP | 0293858 A2 | 07-12-1988 |
| | | | ES | 2053622 T3 | 01-08-1994 |
| | | | JP | H0188147 A | 03-04-1989 |
| | | | US | 5001417 A | 19-03-1991 |
| US 4713165 | A | 15-12-1987 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007033333 A

- JP 63138255 A